Europäisches Patentamt

European Patent Office

Office européen des brevets

(11) Publication number: **0 047 244 B1**

# (12) EUROPEAN PATENT SPECIFICATION

(45) Date of publication of patent specification: **15.07.87**

(21) Application number: **80901983.9**

(22) Date of filing: **13.03.80**

(86) International application number:
**PCT/US80/00269**

(87) International publication number:
**WO 81/02550 17.09.81 Gazette 81/22**

(51) Int. Cl.⁴: **B 60 T 1/06**

## (54) WHEEL BRAKE ARRANGEMENT.

(43) Date of publication of application:
**17.03.82 Bulletin 82/11**

(45) Publication of the grant of the patent:
**15.07.87 Bulletin 87/29**

(84) Designated Contracting States:
**DE FR GB**

(56) References cited:
**DE-B-1 103 160**
**FR-A-2 052 707**
**FR-A-2 322 757**
**FR-A-2 418 384**
**GB-A- 929 826**
**GB-A- 997 598**
**US-A-1 634 370**
**US-A-2 111 297**
**US-A-2 711 229**
**US-A-2 801 713**
**US-A-3 548 976**
**US-A-3 779 348**
**US-A-3 880 262**
**US-A-3 882 975**
**US-A-4 030 576**
**US-A-4 142 615**

(73) Proprietor: **CATERPILLAR INDUSTRIAL INC.**
**5960 Heisley Road**
**Mentor Ohio 44060 (US)**

(72) Inventor: **CALLAGHAN, William I.**
**8548 Seaton Place**
**Mentor, OH 44060 (US)**
Inventor: **EHINGER, Charles P.**
**7242 Brownell Drive**
**Mentor, OH 44060 (US)**

(74) Representative: **Wagner, Karl H.**
**WAGNER & GEYER Patentanwälte**
**Gewuerzmuehlstrasse 5 Postfach 246**
**D-8000 München 22 (DE)**

Courier Press, Leamington Spa, England.

## Description

### Technical Field

This invention relates to a wheel brake arrangement for motivating a brake shoe into contact with a brake member and for retaining the shoe in contacting relation with a housing of the wheel arrangement.

### Background Art

There are a number of wheel brake arrangements which have a brake drum adjacent one end of the housing and at least one radially expandable brake shoe intermediate the housing and the drum. A wheel cylinder acts responsive to fluid pressure to motivate the shoe into frictional braking engagement with the drum.

In such prior art arrangements as described above, a backing plate is provided for the brake shoes, with the backing plate being connected to the housing. The wheel cylinder is attached to a side of the backing plate removed from the housing. Hydraulic lines extend from outside of the housing, pass over the backing plate, and are connected to the wheel cylinder. Thus, the lines are exposed outside of the frame and are subject to damage and leakage due to the compound bend angles necessary. Further, such lines are difficult to assemble to the wheel cylinder due to lack of space, particularly when a wheel gear is mounted on a hub or spindle within the housing. In addition, the backing plates are formed by an additional metal working step which adds to the overall expense of the integrated wheel brake arrangement.

Prior art backing plates are held against the brake shoes by spring retainers which include a pin having an enlarged end thereof positioned through a hole in the backing plate, with the large end of the pin being too large to pass through the hole. The pin is biased between the brake shoe and the backing plate so that the large end of the pin bears against the backing plate in a manner to produce a force which biases the brake shoe into contact with the backing plate. Such a spring retainer arrangement works well, but is difficult to assemble. That is, during assembly the pin can fall through the hole in the backing plate (which hole is large enough to admit all parts of the pin except for the enlarged end thereof). This is clearly undesirable and can lead to wasted time during assembly. Further, if the backing plate can be eliminated, thus saving expense and allowing elimination of exposed and easily damaged pressurized lines, a problem arises of providing a retainer for holding the brake shoes against the housing.

The wheel cylinders of the prior art are generally mounted flatly against the backing plate. In such structures the wheel cylinder can be attached to the housing.

FR—A—2 322 757 shows an arrangement in accordance with the precharacterizing part of claim 1, wherein a planetary gearset is surrounded by a housing which carries the brake cylinder. While this eliminates the backing plate, it does not solve all the above mentioned problems.

US—A—2 711 229 shows brake lines through a wheel spindle, but is concerned with the problem of sealing such lines to enable an arrangement in which a brake drum is mounted out-board of an undriven wheel. This document thus does not approach the problem of braking driven wheels by means of a brake shoe movable into frictional engagement with a brake member rotatable with a ring gear located within a ring gear housing.

### Disclosure of Invention

The present invention is distinguished from the arrangement in accordance with the pre-characterizing part of claim 1, by the features of the characterizing part of the claim. Preferred embodiments of the invention are claimed in the dependent claims.

It will be noted that a backing plate is completely eliminated and the pressurized fluid introduced to the motivating means (the wheel cylinder) passes not through any exposed lines external of the wheel gear housing, but through the gear housing itself. In one embodiment, the brake shoes are biased against the housing without possible loss of the pin. Thus, assembly problems are minimized and the possibility of line damage is eliminated.

### Brief Description of Drawings

Figure 1 is an end view of a wheel brake arrangement in accordance with an embodiment of the present invention;

Figure 2 illustrates an enlarged view taken along the line II—II of Figure 1; and

Figure 3 illustrates an enlarged view taken along the line III—III of Figure 1.

### Best Mode for Carrying Out the Invention

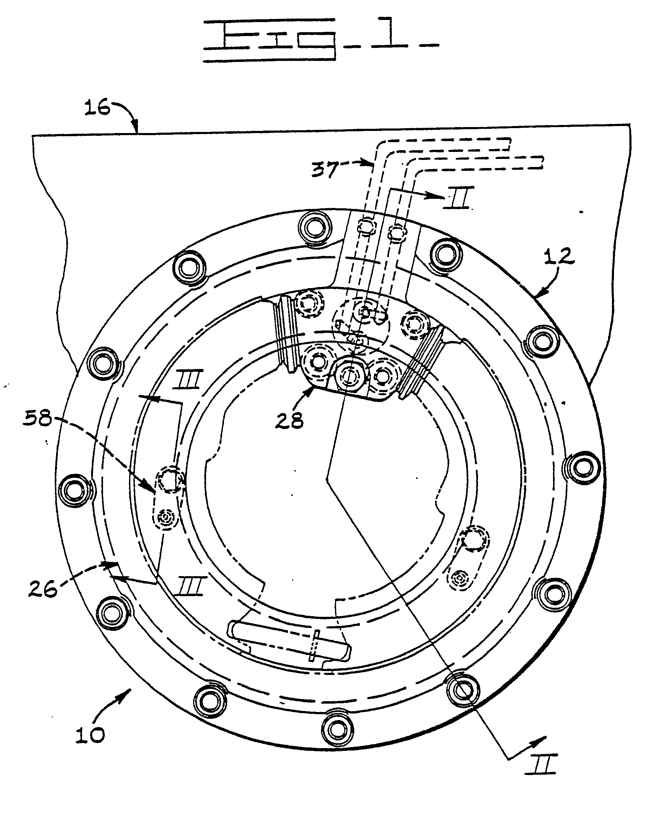

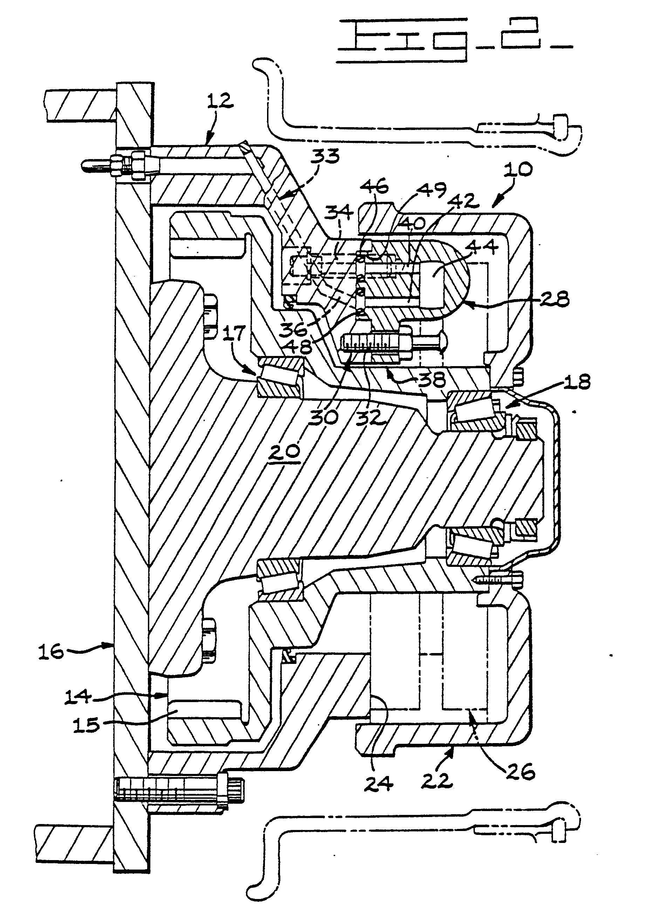

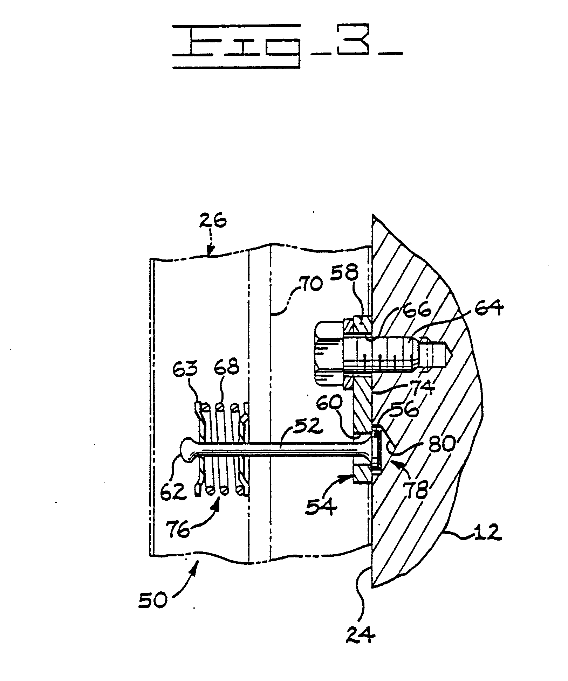

Adverting primarily to Figure 2, but also to Figure 1, the invention relates to an improvement in a wheel brake arrangement 10. The wheel brake arrangement 10 may be of the type illustrated and have a wheel gear housing 12 which radially surrounds a wheel gear 14 conventionally driven by a pinion gear (not illustrated) at teeth 15. The pinion gear conventionally passes through an opening (not illustrated) in a frame 16. The housing 12 is rigidly attached to the frame 16. The wheel gear 14 is rotatably mounted at bearings 17, 18 on a wheel spindle 20. A rotating member (brake drum) 22 is provided adjacent and generally spaced from one end 24 of the housing 12 and is secured to gear 14. A pair of radially expandable friction members (brake shoes) 26 (shown in phantom in Figures 2 and 3) are located intermediate the housing 12 and the drum 22. A wheel cylinder 28 serves as means for hydraulically motivating the shoe 26 into frictional coupling engagement with the drum 22.

As is seen in Figures 1 and 2, means 30, in the embodiment illustrated four bolts, only one of which, 32, is seen in Figure 2, serves for mounting the wheel cylinder 28 to the one end 24 of the housing 12. A passage system 33, in the embodiment illustrated a pair of passages 34 and 36, is formed within the housing 12. The passage system 33 communicates with a master cylinder (not shown) via a conduit 37 which is fully protected by the frame 16.

Means 38 are provided for connecting each of the passages 34, 36 directly with the wheel cylinder 28. In the embodiment illustrated in Figure 2, the aforementioned connecting means 38 comprises the bolting in place, via the bolts 32, of the wheel cylinder 28 to the one end 24 of the housing 12, along with a pair of passages 40, 42 which connect respectively with the passages 34, 36 and a control chamber 44 of the wheel cylinder 28. A pair of O-ring seals 46, 48, respectively seal the connection between the passages 34 and 40 and the passages 36 and 42. One of the pair of passages 34 and 36 serves for pressurizing, and the other for bleeding the wheel cylinder 28 in a conventional manner. Although two passages 34 and 36 are illustrated, it should be recognized that a single passage can be, and often conventionally is only, provided for brake system pressurization. Thus, it is clear that there are no exposed hydraulic or pneumatic lines which are subject to breakage or which must be carefully aligned on assembly, since no lines are provided but instead only the passage system 33 in the housing 12. And, since the housing 12 is rigidly connected to the frame 16, no such somewhat flexible lines are needed to complete the passage system 33.

The wheel cylinder 28 fits in a piloting cavity 49 in the housing 12. Thus, when the wheel cylinder 28 is fitted into the piloting cavity 49 and the bolts 32 are put in place, the wheel cylinder 28 is properly positioned relative to the brake shoes 26, and importantly, means are provided to properly connect the passage 34 to the passage 40 and the passage 36 to the passage 42 at the O-ring seals 46 and 48. Proper alignment of the passages 34 and 36 with the passages 40 and 42 is thereby provided. Since the passage system 33 is completely within the housing 12, there are no exposed hydraulic or pneumatic lines to be damaged.

In order that the one end 24 of the housing 12 can effectively take the place of the conventional backing plate, it is necessary that the one end 24 of the housing 12 be relatively smooth surfaced so that the brake shoe 26 can be properly guided by sliding thereagainst and that the one end 24 have a large enough diameter to support the brake shoe 26.

Adverting now primarily to Figure 3, there is illustrated therein means 50 for biasing each brake shoe 26 into contacting relation with the one end 24 of the housing 12. As will be seen, the biasing means 50 includes a pin 52 which is aligned generally perpendicular to the one end 24 of the housing 12. Means 54 are provided which serve for retaining a first end 56 of the pin 52 from moving axially outwardly (leftwardly in Figure 3) relative to the one end 24 of the housing 12. The illustrated means 54, for retaining the first end 56 of the pin 52, is in the form of a plate 58 having a hole 60 therethrough, through which the pin 52 is received. The first end 56 of the pin 52, as illustrated, is too large to pass through the hole 60. A second end 62 of the pin 52 is sufficiently small to pass through the hole 60 to allow assembly of the overall biasing means 50. Although not illustrated because of its conventional nature, the second end 62 can be shaped to pass through a slot (not illustrated) in a washer 63 and then be rotated to a locking position where it will no longer be aligned with the slot and be able to pass through the slot.

Means, in the embodiment illustrated a bolt 64, which passes through an appropriate hole 66 in a portion of the plate 58 removed from the hole 60, serves for affixing the plate 58 in immovable relation to the housing 12 with the pin 52 in movable relation within the hole 60. A compression coil spring 68 acts between a web 70 of the brake shoe 26 and the washer 63, thereby biasing the shoe 26 into contact with the end surface 24 pulling the first end 56 of the pin 52 against a housing facing side 74 of the plate 58. Thus, the means 54 serves the desired purpose of retaining the first end 56 of the pin 52 from moving axially away from (outwardly relative to the one end 24 of) the housing 12.

The spring 68 and the washer 63, thus, serve as means 76 for biasing the second end 62 of the pin 52 against the brake shoe 26 in a direction to bias the brake shoe 26 against the one end 24 of the housing 12.

The brake shoe biasing means 50 also includes means 78 for retaining the first end 56 of the pin 52 from moving into (axially inwardly relative to the one end 24 of) the housing 12. In the embodiment illustrated, the retaining means 78 comprises a bore 80 which extends generally axially into the housing 12, but does not extend fully therethrough. Thus, the first end 56 of the pin 52 is held between the housing facing side 74 of the plate 58 and the bottom of the bore 80.

Assembly is simplified with the brake shoe biasing means 50 in that the pin 52 is held in position during assembly. Briefly, the first end 56 of the pin 52 is held in the bore 80 by the plate 58. This prevents the pin 52 from falling out during assembly. The pin 52 is then disposed in an aperture in the web 70. The spring 68 and washer 63 are then positioned over the second end 62 of the pin 52, as by making use of a slot in the washer 63.

Industrial Applicability

The invention operates to eliminate a backing plate between the housing 12 and the brake shoe 26. With the backing plate eliminated, it is possible to bring in hydraulic or pneumatic pressure through passages bored in the housing 12. This eliminates exposed lines and removes the problem of line connection on assembly. With the backing plate eliminated, means 50 are provided for axially biasing the brake shoe 26 into contacting relation with the one end 24 of the housing 12.

A particularly advantageous biasing means 50 is disclosed which cannot fall out during assembly thereof, because of its unique design, particularly because of the means 78 which serves for retaining the first end 56 of the pin 52 of the biasing means 50 from axially moving inwardly relative to the one end 24 of the housing 12. A piloting cavity 49 is provided in the housing 12 for easy assembly and proper aligning of the passage system 30 with the wheel cylinder 28.

**Claims**

1. A wheel brake arrangement (10) having a frame (16), a wheel gear housing (12) adjacent the frame (16) surrounding a gear wheel (14) rotatable with a brake member (22) adjacent one end (24) of the wheel gear housing (12), the rotating brake member (22) being adapted to brake a wheel hub, and a brake shoe friction member (26), means (28) for fluid pressure motivating the brake shoe friction member (26) to move into frictional engagement with the rotating brake member (22), said means being located intermediate the wheel gear housing (12) and the rotating brake member (22), means (30) for mounting said motivating means (28) in abutting relation directly to said one end of said wheel gear housing (12) without the interposition of a backing plate between said motivating means (28) and said wheel gear housing (12); and means for rigidly connecting the wheel gear housing (12) to the frame (16); and wherein said gear wheel (14) and said brake member (22) are rotatably mounted on a spindle (20) located coaxially within said gear housing (12); characterized by said wheel gear housing (12) defining a passage (33) which extends between said frame (16) and said motivating means (28), and by means (38) connecting said passage (33) with said motivating means (28), and in that the gear wheel (14) is coaxial with the gear housing (12).

2. A wheel brake arrangement (10) as claimed in claim 1 wherein said brake member is an annular rotating brake drum member (22) mountable to a surrounding wheel hub, said brake shoe friction member (26) being movable radially into frictional engagement with the rotating brake drum member (22).

3. The wheel brake arrangement as claimed in claim 1 or 2, further including:
means (50) for axially biasing said friction brake shoe member (26) into direct contacting relation with said one end (24) of said wheel gear housing (12).

4. The wheel brake arrangement as claimed in claim 3, wherein said biasing means (50) has:
a pin (52) aligned generally perpendicular to said one end (24) of said housing (12);
means (54) for retaining a first end (56) of said pin (52) from moving axially away from said housing (12);
means (76) for biasing a second end (62) of said pin (52) against said friction brake shoe member (26) and in a direction for biasing said friction brake shoe member (26) against said one end (24) of said housing (12); and
means (78) for retaining said first end (56) of said pin (52) from moving axially into said housing (12).

5. The wheel brake arrangement as claimed in claim 4, wherein said inward movement retaining means (78) is a bore (80) which extends generally axially into said wheel gear housing (12) but does not extend therethrough.

6. The wheel brake arrangement (10) as claimed in claim 4 or 5 including
a plate (58) having a hole (60) therethrough through which said pin (52) fits, said first end (56) of said pin (52) being too large to pass through said hole (60) and said second end (62) of said pin (52) being sufficiently small to pass through said hole (60);
means (64, 66) for affixing said plate (58) in immovable relation to said housing (12) with said pin (52) in movable relation with said hole (60).

7. The wheel brake arrangement as claimed in any of claims 1 to 6, including:
means for aligning the motivating means (28) with said passage (33).

**Patentansprüche**

1. Eine Radbremsanordnung (10) mit einem Rahmen (16), einem Radgetriebegehäuse (12) benachbart zum Rahmen (16), ein Getrieberad (14) umgebend drehbar mit einem Bremsglied (22) benachbart zu einem Ende (24) des Radgetriebegehäuses (12), wobei das Drehbremsglied (22) zum Bremsen einer Radnabe geeignet ist, und ein Bremsschuhreibungsglied (26), Mittel (28) zur Strömungsmitteldruckbetätigung des Bremsschuhreibungsglieds (26) zur Bewegung in Reibungseingriff mit dem sich drehenden Bremsglied (22), wobei die Mittel zwischen dem Radgetriebegehäuse (12) und dem sich drehenden Bremsglied (22) angeordnet sind, Mittel (30) zur Anordnung der Betätigungsmittel (28) in Anschlagbeziehung direkt an dem erwähnten einen Ende des Radgetriebegehäuses (12) ohne die Zwischenlage einer Stützplatte zwischen den Betätigungsmitteln (28) und dem Radgetriebegehäuse (12), und Mittel zur starren Verbindung des Radgetriebegehäuses (12) mit dem Rahmen (16), wobei das Getrieberad (14) und das Bremsglied (22) drehbar auf einer Spindel (20) koaxial innerhalb des Getriebegehäuses (12) angeordnet sind, dadurch gekennzeichnet, daß das Radgetriebegehäuse (12) einen Durchlaß (33) definiert, der sich zwischen dem Rahmen (16) und den Betätigungsmitteln (28) erstreckt, und daß Mittel (38) den Durchlaß (33) mit den Betätigungsmitteln (28) verbinden, und daß schließlich das Getrieberad (14) koaxial zu dem Getriebegehäuse (12) angeordnet ist.

2. Radbremsanordnung (10) nach Anspruch 1, wobei das Bremsglied ein ringförmiges, sich drehendes Bremstrommelglied (22) ist, und zwar anordenbar an einer umgebenden Radnabe, wobei das Bremsschuhreibungsglied (26) radial nach innen in Reibungseingriff mit dem sich drehenden Bremstrommelglied (22) bewegbar ist.

3. Radbremsanordnung nach Anspruch 1 oder 2, mit Mitteln (50) zum axialen Vorspannen des Reibungsbremsschuhglieds (26) in direkter Kontaktbeziehung mit dem einen Ende (24) des Radgetriebegehäuses (12).

4. Radbremsanordnung nach Anspruch 3, wobei die Vorspannmittel (50) folgendes aufweisen:

einen Stift (52) im allgemeinen senkrecht ausgerichtet mit dem erwähnten einen Ende (24) des Gehäuses (12),

Mittel (54) zum Halten eines ersten Endes (56) des Stiftes (52) gegenüber einer Axialbewegung vom Gehäuse (12) weg,

Mittel (76) zum Vorspannen eines zweiten Endes (62) des Stiftes (52) gegen das Reibungsbremsschuhglied (26) und in eine Richtung zum Vorspannen des Reibungsbremsschuhglieds (26) gegen das eine Ende (24) des Gehäuses (12),

Mittel (78) zum Halten des ersten Endes (56) des Stiftes (52) gegenüber einer Axialbewegung in das Gehäuse (12).

5. Radbremsanordnung nach Anspruch 4, wobei die Haltemittel (78) für die nach innen gerichtete Bewegung eine Bohrung (80) sind, die sich im Ganzen axial in das Radgetriebegehäuse (12) erstreckt, aber sich nicht durcherstreckt.

6. Radbremsanordnung (10) nach Anspruch 4 oder 5, mit einer Platte (58) mit einem hindurchgehenden Loch (60) zur Aufnahme des Stifts (52), wobei das erste Ende (56) des Stifs (52) zu groß ist, um durch das Loch (60) zu passen, und wobei das zweite Ende (62) des Stiftes (52) hinreichend klein ist, um durch das Loch (60) zu passen und Mittel (64, 66) zum Befestigen der Platte (58) in einer unbeweglichen Beziehung am Gehäuse (12) mit dem Stift (52) in beweglicher Beziehung mit dem Loch (60).

7. Radbremsanordnung nach einem der Ansprüche 1 bis 6, mit Mitteln zum Ausrichten der Betätigungsmittel (28) mit dem Durchlaß (33).

**Revendications**

1. Dispositif de frein de roue (10) comprenant un châssis (16), un carter d'engrenage de roue (12) adjacent au châssis (16) et entourant une roue dentée (14) susceptible de tourner avec un élément de frein (22) adjacent à une extrémité (24) du carter d'engrenage de roue (12), l'élément de frein tournant (22) étant adapté à freiner un moyeu de roue, et un élément de frottement formant patin de frein (26), un moyen (28) pour qu'une pression de fluide sollicite l'élément de frottement formant patin de frein (26) à venir en contact de frottement avec l'élément de frein tournant (22), ledit moyen étant situé entre le carter d'engrenage de roue (12) et l'élément de frein tournant (22), un moyen (30) pour monter ledit moyen de sollicitation (28) en butée directement contre ladite extrémité dudit carter d'engrenage de roue (12) sans interposition d'une plaque d'appui entre ledit moyen de sollicitation (28) et ledit carter d'engrenage de roue (12); et un moyen pour rendre le carter d'engrenage de roue (12) solidaire du châssis (16);

et dans lequel ladite roue dentée (14) et ledit élément de frein (22) sont montés à rotation sur un arbre (20) situé coaxialement à l'intérieur dudit carter d'engrenage de roue (12),

caractérisé en ce que ledit carter d'engrenage de roue (12) délimite un passage (33) qui s'étend entre ledit châssis (16) et ledit moyen de sollicitation (28), en ce qu'un moyen (38) relie ledit passage (33) avec ledit moyen de sollicitation (28), et en ce que la roue dentée (14) est coaxiale par rapport au carter d'engrenage de roue (12).

2. Dispositif de frein de roue (10) selon la revendication 1, dans lequel ledit élément de frein est un élément de tambour de frein rotatif annulaire (22) apte à être monté sur un moyeu de roue entourant, ledit élément de frottement formant patin de frein (26) étant déplaçable radialement pour entrer en contact de frottement avec l'élément de tambour de frein rotatif (22).

3. Dispositif de frein de roue selon la revendication 1 ou 2, comprenant en outre:

un moyen (50) pour solliciter axialement ledit élément de frottement formant patin de frein (26) et le mettre en contact direct avec ladite une extrémité (24) dudit carter d'engrenage de roue (12).

4. Dispositif de frein de roue selon la revendication 3, dans lequel ledit moyen de sollicitation (50) comprend:

une goupille (52) s'étendant sensiblement perpendiculairement à ladite extrémité (24) dudit carter (12);

un moyen (54) pour empêcher une première extrémité (56) de ladite goupille (52) de se déplacer dans le sens axial en s'éloignant dudit carter (12);

un moyen (76) pour solliciter une seconde extrémité (62) de ladite goupille (52) contre ledit élément de frottement formant patin de frein (26) et suivant une direction tendant à solliciter ledit élément de frottement formant patin de frein (26) contre ladite extrémité (24) dudit carter (12); et un moyen (78) pour empêcher ladite première extrémité (56) de ladite goupille (52) de se déplacer axialement pour pénétrer dans ledit carter (12).

5. Dispositif de frein de roue selon la revendication 4, dans lequel ledit moyen empêchant un mouvement vers l'intérieur (78) est un alésage (80) qui s'étend sensiblement axialement dans le carter d'engrenage de roue (12) mais qui ne le traverse pas entièrement.

6. Dispositif de frein de roue (10) selon la revendication 4 ou 5, comprenant

une plaque (58) traversée par un trou (60) recevant ladite goupille (52), ladite première extrémité (56) de ladite goupille (52) étant trop grande pour traverser ledit trou (60) et ladite seconde extrémité (62) de ladite goupille (52) étant suffisamment petite pour traverser ledit trou (60);

et un moyen (64, 66) pour fixer ladite plaque (58) en relation immobile par rapport audit carter (12), ladite goupille (52) étant en relation mobile par rapport audit trou (60).

7. Dispositif de frein de roue selon l'une quelconque des revendications 1 à 6, comprenant:

un moyen pour aligner le moyen de sollicitation (28) avec ledit passage (33).

# Fig.1.

0 047 244

FIG. 2.

2

_Fig_3_